# FASCICULE DE BREVET EUROPEEN

(11) **EP 2 038 210 B1**
(45) Date de publication et mention de la délivrance du brevet: **07.09.2011**
(21) Numéro de dépôt: 07726003.2
(22) Date de dépôt: 14.06.2007
(51) Int. Cl.: C01B 3/04, C01B 3/50, C01B 13/02, B01J 19/24, B01D 53/22

(54) **UN REACTEUR AVEC GRADIENT THERMIQUE CONTROLE POUR LA PRODUCTION D'HYDROGENE PUR**
REAKTOR MIT EINEM WÄRMEGRADIENTEN, DER ZUR PRODUKTION VON REINEM WASSERSTOFF GESTEUERT WIRD
REACTOR WITH A THERMAL GRADIENT CONTROLLED FOR THE PRODUCTION OF PURE HYDROGEN

(30) Priorité: 15.06.2006 FR 0605309
(43) Date de publication de la demande: 25.03.2009
(73) Titulaire: H2 Power Systems Limited, Dublin 4 (IE)
(72) Inventeur: ROHRICH, Klaus, 01220 Divonne-les-Bains (FR); WIRTH, Harald, 01550 Farges (FR); KONGMARK, Nils, 01210 Ferney-Voltaire (FR)
(74) Mandataire: Schnabel, Jörg
(86) Numéro de dépôt international: PCT/EP2007/005236
(87) Numéro de publication internationale: WO 2007/144166

(56) Documents cités:
- WO-A-2006/064311
- FR-A1- 2 839 713
- FR-A2- 2 366 216
- US-A1- 2004 050 801

## Description

L'hydrogène est le vecteur d'énergie du futur et beaucoup de développements sont en cours dans le domaine des piles à combustible, des moteurs à combustion d'hydrogène et des technologies reliées. Cependant, les coûts économiques et écologiques de la production, du transport et du stockage d'hydrogène sont des obstacles à un changement rapide d'une économie basée sur les combustibles fossiles vers une économie basée sur l'hydrogène. La production d'hydrogène par dissociation thermique de l'eau dans un réacteur à membranes, à stade ultime en utilisant l'énergie solaire, est non seulement neutre pour l'environnement mais peut aussi donner un rendement potentiellement élevé.

Le dispositif présenté est basé sur la dissociation thermique de l'eau dans un réacteur à membranes. Il est optimisé, eu égard aux transferts de chaleur et de masse, pour une extraction simultanée et stoechiométrique de l'oxygène et de l'hydrogène [1]. Autonome, d'une petite ou moyenne taille pour la production d'hydrogène, le dispositif aidera à réduire le besoin de transport et de stockage d'hydrogène. En conséquence, il facilitera l'introduction de l'hydrogène comme vecteur d'énergie, générant des gains économiques importants.

L'hydrogène produit par le dispositif est pur, le seul contaminant étant l'eau. Il peut être conduit directement à une pile à combustible et peut ainsi être employé pour la co-production de chaleur et d'électricité pour des utilisations domestiques ou dans de petites unités de production décentralisée. L'utilisation du dispositif pour des applications mobiles est aussi imaginable, dans des versions très compactes intégrées dans les voitures équipées de piles à combustible.

L'évolution récente dans le secteur des matériaux, et particulièrement le développement de nouveaux types de membranes, ont permis de fabriquer des dispositifs économiquement viables et durables, tels que celui-ci.

Les principes des dispositifs produisant de l'hydrogène basés sur la dissociation de l'eau à hautes températures et sur la séparation de gaz par des membranes sont présentés dans plusieurs publications et brevets, tels que ceux de Fally [2] et [3], Kogan [4], Seitzer [5] et [6], et Lee et al. [7].

Les problèmes principaux rencontrés dans les générateurs d'hydrogène basés sur la dissociation thermique de l'eau résident dans le fait que, sans dispositions complémentaires, l'hydrogène est présent seulement dans la zone de température élevée où l'eau est au moins partiellement dissociée. L'hydrogène est extrait soit en plaçant les membranes dans les zones chaudes, soit en trempant la vapeur dissociée pour supprimer la recombinaison. Les membranes sélectives à hydrogène actuellement disponibles ne tiennent pas les très hautes températures dans la zone de dissociation, et le processus de trempe consomme beaucoup d'énergie. Dans les deux cas, ces dispositifs ont soit un temps de vie limité, soit une efficacité limitée.

Ces problèmes peuvent être évités en séparant l'oxygène du mélange de gaz dans la zone chaude, puis en extrayant la vapeur restante, qui est enrichie d'hydrogène et dont l'hydrogène peut être séparé de diverses façons. Cependant, le mélange de gaz extrait emporte une part de l'énergie de réaction et rend le processus inefficace. Extraire l'hydrogène plus proche de la zone chaude et ne pas extraire de la vapeur de ballast serait plus efficace. Fally [3] a oeuvré dans ce sens en positionnant les membranes sélectives à l'hydrogène en sortie de la chambre de réaction.

Les membranes sélectives à l'hydrogène qui fonctionnent efficacement le font toujours à des températures bien en dessous de la température de dissociation de l'eau. Dans ces plages de températures, certaines membranes qui ont été développées ont même des effets catalytiques, accélérant ainsi le transfert de l'hydrogène [8].

La présente invention comme caractérisé dans la revendication 1 révèle une approche holistique de la dissociation thermique de l'eau et de la séparation de l'hydrogène, prenant en compte à la fois les contraintes des matériaux, et le besoin d'un rendement élevé. Un profil de température, optimisé par rapport aux caractéristiques des différents matériaux des composants, est réalisé par le choix d'une géométrie spécifique, par le dimensionnement du dispositif, et par le positionnement de ses composants.

La présente invention est une chambre de réaction remplie d'eau (ou de vapeur ; dans ce qui suit, « eau » représente également l'état d'agrégation de vapeur) à l'intérieur de laquelle tous les composants fonctionnels selon la revendication 1 sont placés.

La ou les sources de chaleur sont placées dans l'eau à l'intérieur de la chambre de réaction, avec suffisamment de puissance pour chauffer l'eau dans leur proximité jusqu'à des températures où celle-ci se dissocie, au moins partiellement. Une dissociation considérable de l'eau commence à des températures autour de 2000 K pour environ un pour cent des molécules présentes. Les parois de la chambre de réaction sont refroidies. Il y a un gradient de température entre les sources de chaleur chaudes et les parois de la chambre qui restent froides.

Des membranes sélectives à l'oxygène sont placées près des sources de chaleur dans la zone où l'eau est dissociée. Elles sont employées pour extraire l'oxygène dans cette première zone de dissociation. En outre, elles servent d'écran pour protéger les autres composants du rayonnement thermique direct venant des sources de chaleur.

Des membranes sélectives à l'hydrogène sont placées dans les zones plus froides près des parois de la chambre de réaction. La température de ces parois est contrôlée par refroidissement. La distance entre les membranes sélectives à l'hydrogène et la zone de dissociation est fonction des matériaux utilisés dans les membranes, selon les conditions spécifiques d'opérabilité de l'ensemble.

Les membranes sont réalisées de telle manière que les gaz extraits puissent être pompés ou rincés en utilisant un gaz porteur neutre. Des composants tubulaires, dont les membranes forment au moins une part des parois dans lesquelles elles sont intégrées, sont des choix possibles. L'hydrogène et l'oxygène sont extraits dans le même rapport que celui dans lequel ils se trouvent dans la molécule d'eau. L'extraction est contrôlée par la puissance de pompage ou par la vitesse de rinçage. Une quantité correspondante d'eau est injectée par les parois du réacteur pour maintenir des conditions de travail constantes.

Avec cet arrangement, la zone de température plus élevée devient enrichie d'hydrogène, et un échange de cet hydrogène avec la zone de température plus basse se développe pour compenser la différence en concentration. L'avantage principal d'un tel arrangement est l'écoulement libre des gaz, tout en offrant la possibilité d'une conception géométrique simple, facilitant la fabrication des composants.

L'efficacité du dispositif est déterminée par la quantité des gaz extraits par rapport à la puissance mise en oeuvre pour le chauffage de l'eau et pour le refroidissement du dispositif. La quantité des gaz extraits dépend elle-même de la quantité d'oxygène et d'hydrogène disponibles et donc du degré de dissociation de l'eau.

Pour améliorer l'efficacité du dispositif, les membranes sélectives à l'oxygène sont disposées autour de(s) source(s) de chaleur de sorte de réduire le flux de chaleur depuis la (les) source(s) de chaleur vers la zone en dehors des températures élevées. Le résultat d'un tel arrangement est un équilibrage de la température dans la zone entre une source de chaleur et les membranes sélectives à l'oxygène, toutes proches. La source de chaleur peut travailler avec une puissance plus basse et la zone de dissociation de l'eau est plus étendue.

Des boucliers de rayonnement additionnels, qui laissent passer l'hydrogène, sont placés entre les zones de températures plus élevées et les zones de températures plus basses, pour augmenter l'effet déjà créé par les membranes sélectives à l'oxygène.
La figure 1 est une vue en coupe longitudinale montrant schématiquement un dispositif selon l'état de la technique.
La figure 2 est une vue en coupe transversale détaillant la disposition de tubes-membranes à oxygène autour d'un tube de chauffage.
La figure 3a est une vue en coupe transversale détaillant la disposition des tubes-membranes à oxygène autour d'un tube de chauffage et entre ce dernier et des tubes-membranes à hydrogène dans un dispositif selon l'état de la technique.
La figure 3b est une vue en coupe transversale montrant schématiquement des tubes-membranes à oxygène, entourant des tubes de chauffage répartis dans la chambre d'un réacteur selon l'état de la technique et entoures eux-mêmes par des tubes-membranes à hydrogène disposés suivant le pourtour intérieur de la chambre d'un réacteur selon l'état de la technique.
Les figures 4a et 4b montrent en coupe transversale une disposition selon les figures 3a et 3b dans laquelle des boucliers de rayonnement additionnels sont intercalés entre les tubes-membranes à oxygène et les tubes-membranes à hydrogène.
La figure 5 est une vue en coupe longitudinale montrant un dispositif selon un deuxième mode d'exécution de l'invention.

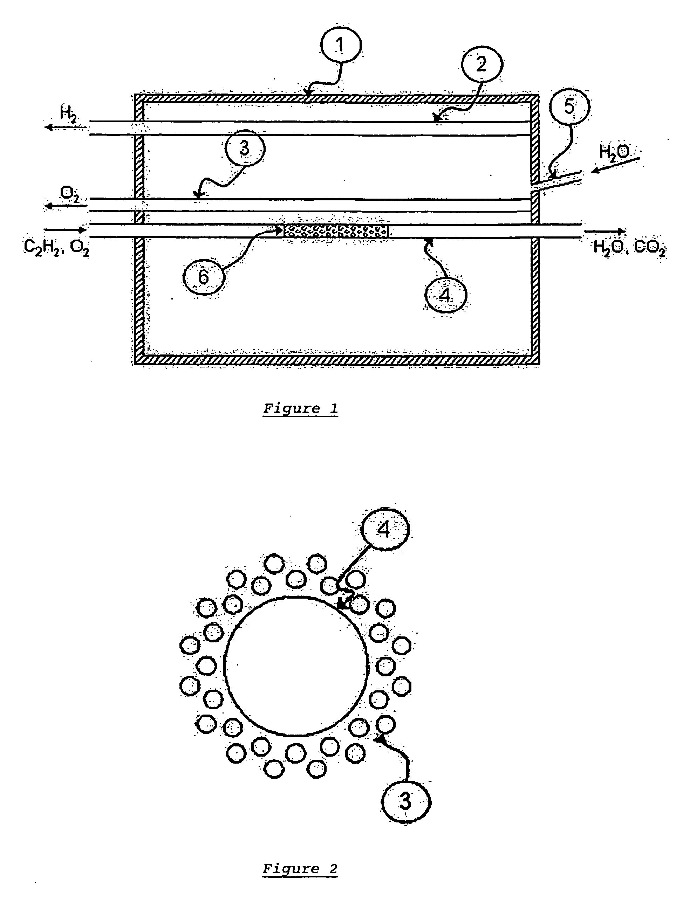

La figure 1 montre un dispositif selon l'état de la technique. Le dispositif est constitué d'un volume de réaction fermé. Dans l'exemple, la chambre de réacteur (1) est cylindrique. La Figure 1 montre une section radiale, toute autre figure montrant des sections transversales. Traversant la chambre du réacteur, et parallèlement à son axe de symétrie, il y a trois types d'un ou plusieurs tubes avec des fonctions spécifiques :
   1. un ou plusieurs tubes solides et essentiellement étanches aux gaz, au moins partiellement faits de matériel de membrane pour passer sélectivement de l'hydrogène (2, « membrane à hydrogène »),
   2. un ou plusieurs tubes solides et essentiellement étanches aux gaz, au moins partiellement faits de matériel de membrane pour passer sélectivement de l'oxygène (3, « membrane à oxygène »), et
   3. un ou plusieurs tubes solides et essentiellement étanches aux gaz (4, « tubes de chauffage ») contenant la (les) source(s) de chaleur (6).

Les tubes de chauffage sont entourés par les membranes à oxygène. La séparation physique entre l'eau et la source de chaleur par le tube de chauffage permet d'employer n'importe quel type de chauffage. Tandis que la symétrie cylindrique choisie pour cette réalisation favorise l'utilisation de chauffages électriques ou de sources de chaleur de combustion comme les brûleurs à gaz poreux ou les brûleurs à gaz turbulents, la géométrie peut être adaptée pour une utilisation d'un chauffage solaire. La puissance de la source de chaleur est telle que l'eau l'entourant est chauffée jusqu'aux températures où l'eau est au moins partiellement dissociée.

Une température typique du tube de chauffage est 2500 K. Å de telles températures, le transfert thermique par rayonnement est dominant ; le transfert thermique par convection naturelle est relativement limité ; et le transfert thermique par conduction dans la vapeur est négligeable.

Chaque tube de chauffage est entouré par des membranes à oxygène. Les matériaux de membrane sélectifs à l'oxygène, par exemple faits en céramique basée sur l'oxyde de zirconium ont une bonne perméabilité et résistent aux très hautes températures de la zone de dissociation de l'eau. Ces membranes à oxygène sont disposées autour de la source de chaleur en un ou plusieurs anneaux concentriques, un arrangement comportant deux anneaux étant montré dans la Figure 2, pour refléter le rayonnement direct provenant de la source de chaleur et lui faire écran. En conséquence, la température dans la région entre le tube de chauffage et les membranes à oxygène augmente et le gradient thermique dans cette zone diminue. Ainsi, la source de chaleur peut travailler avec une puissance plus basse pour des quantités égales d'eau dissociée. L'intérieur des membranes à oxygène est rincé avec un gaz neutre ou pompé pour enlever l'oxygène extrait. Les membranes à oxygène bloquent une part importante du rayonnement direct, mais elles laissent de l'espace pour l'échange de l'eau et des autres gaz, notamment l'hydrogène, entre la zone de dissociation et les zones hors membranes à oxygène, éloignées du tube de chauffage.

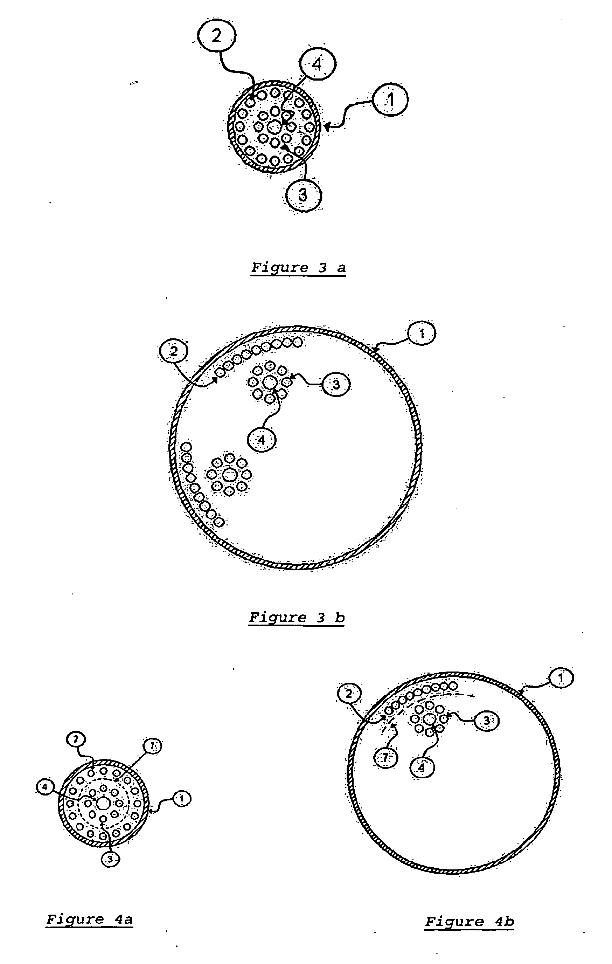

Le volume de réaction peut contenir un (Figure 3 a) ou plusieurs (Figure 3 b) arrangements des tubes de chauffage et des membranes à oxygène.

La géométrie de la chambre de réaction, le positionnement des composants à l'intérieur et la température des parois de la chambre de réaction gouvernent comment la température change à l'« extérieur » des membranes à oxygène, c'est-à-dire, dans la direction plus éloigné du tube de chauffage. La température des parois de la chambre de réaction est contrôlée par refroidissement ; elle est choisie de sorte que la distribution de la température à l'intérieur du volume de réaction et près de ses parois crée les conditions optimales d'une zone de quelques centimètres où les membranes à hydrogène peuvent être placées. Les membranes à hydrogène disponibles d'aujourd'hui, sont conçues pour des températures de fonctionnement des matériaux sélectifs en dessous de 1500 K. La puissance de refroidissement nécessaire peut être déterminée par exemple avec un outil de simulation numérique. L'intérieur des membranes à hydrogène est rincé avec un gaz neutre ou pompé pour enlever l'hydrogène extrait.

La baisse de température, à travers de deux anneaux concentriques de membranes à oxygène agissant comme écran de rayonnement, a été simulée pour une géométrie donnée, et elle est de l'ordre de 300 K. Pour réduire encore plus le transfert thermique par rayonnement vers les membranes à hydrogène et les parois du réacteur, des boucliers de rayonnement sont installés dans une zone entre les membranes à oxygène et les membranes à hydrogène. La réduction du transfert thermique permet de baisser la puissance nécessaire pour le chauffage et pour le refroidissement, et, de plus, d'avoir une géométrie plus compacte parce que le gradient thermique entre les membranes à oxygène et les membranes à l'hydrogène, leur distance étant typiquement quelques dizaines de centimètre, est plus grand. Cependant, un échange suffisant de gaz à travers les boucliers de rayonnement doit rester possible. Un arrangement spécifique des boucliers de rayonnement additionnels (7) selon l'invention est montré dans la Figure 4.

La chambre de réaction contient de l'eau, et elle comporte plusieurs arrivées de l'eau (5). La quantité d'eau apportée au départ est choisie de telle manière qu'après chauffage, une valeur de pression de vapeur spécifique soit obtenue, par exemple en dessous de 10 bars, afin d'éviter des complications et comme il l'est stipulé par nombre de règlements de sécurité.

Après que de l'oxygène soit extrait de la zone de dissociation, l'hydrogène en surplus diffusera dans tout le réacteur. L'hydrogène en surplus est extrait dans les zones de températures plus basses. L'hydrogène et l'oxygène sont extraits dans leur rapport stoechiométrique dans l'eau, c'est-à-dire dans un rapport moléculaire de 2 à 1, en contrôlant la vitesse de rinçage ou la puissance de pompage. Parce que la chambre de réaction contient seulement de la vapeur d'eau et ses produits de dissociation et parce que le volume de réaction est physiquement séparé de la source de chaleur, l'hydrogène extrait est pur et n'est mélangé avec aucun gaz de ballast. Afin de maintenir des conditions de travail stables, de l'eau est injectée pour compenser exactement l'oxygène et l'hydrogène extraits. Ainsi, la quantité de gaz à l'intérieur du réacteur est maintenue constante lors du fonctionnement.

Les arrivées d'eau sont prévues en gouttelettes ou en vapeur froide, de telle manière que l'eau puisse refroidir des joints disposés entre les tubes fonctionnels et la chambre du réacteur. L'injection d'eau peut être aussi réalisée par une pénétration de vapeur à travers les parois poreuses du réacteur. L'eau ou la vapeur, qui sont injectées, peuvent être préchauffées en utilisant le rejet thermique de refroidissement des parois du réacteur (composant une partie de l'isolation thermique), avec la chaleur de l'hydrogéne ou de l'oxygène extraits, ainsi qu'avec la chaleur perdue du système de chauffage (par exemple, du gaz d'échappement des brûleurs).

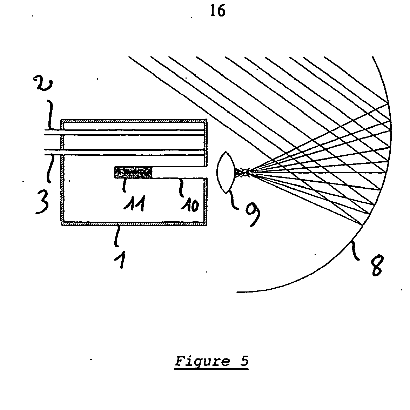

Une réalisation spécifique du dispositif peut avoir comme source de chaleur la radiation solaire. En utilisant des systèmes de miroirs 8 et de lentilles 9 (pour un schéma du principe, voir figure 5) il est possible de concentrer le rayonnement solaire pour le focaliser dans une tube 10 qui contient un récepteur thermique 11. Ce récepteur, par exemple un simple bloc de métal, se chauffe créant une source de chaleur similaire à un brûleur.

Lors du fonctionnement, l'efficacité du dispositif est déterminée par l'énergie nécessaire pour chauffer et dissocier l'eau injectée et par les pertes de chaleur dues au refroidissement des parois et aux gaz extraits. L'efficacité thermique du dispositif peut être améliorée en utilisant la vapeur chaude d'un consommateur d'hydrogène (par exemple une pile à combustible ou un moteur à combustion d'hydrogène) pour remplir le dispositif.
[1] Patent no. FR2839713: Creative Services et Nils Kongmark, "Dispositif pour la production des gaz purs, en particulier d'hydrogène et d'oxygène, a partir des mélanges de gaz ou des liquides, pour l'approvisionnement mobile et stationnaire d'énergie", 2003-11-21.
[2] Patent no. GB1489054: Jacques Fally, "Hydrogen Generating Device", 1977-10-19.
[3] Patent no. GB1532403: Jacques Fally, "Hydrogen Generating Device", 1978-11-15.
[4] Patent no. US5397559: Abraham Kogan, "Method for the Separate Recovery of a High Molecular Weight Gas and a Low Molecular Weight Gas from a Gaseaous Starting Mixture", 1995-03-14.
[5] Patent no. US3901668: Walter H. Seitzer, "Manufacture of Oxygen from High Temperature Steam", 1975-08-26.
[6] Patent no. US3901669: Walter H. Seitzer, "Manufacture of Oxygen from High Temperature Steam" 1975-08-26.
[7] Patent no. US2004050801: Tae H. Lee, Shuangyan Wang, Stephen E. Dorris, and Uthamalingam Balachandran, "Hydrogen Production by High-Temperature Water Splitting Using Electron-Conducting Membranes", 2004-03-18.
[8] Par exemple: U. Balachandran, T.H. Lee, S. Wang, and S.E. Dorris, "Use of Mixed Conducting Membrane to Produce Hydrogen by Water Dissociation", Int. J. Hydrogen Energy 29 (2004) 291-296.

## Revendications

1. Un dispositif pour la séparation thermique de l'eau en l'hydrogène et l'oxygène, comprenant une chambre de réaction (1) fermée contenant de l'eau et, dans ladite chambre de réaction :
- un système de chauffage comprenant un ou plusieurs éléments de source(s) de chaleur (4,11),
- une ou plusieurs membranes (3), essentiellement étanches aux gaz, pour passer sélectivement de l'oxygène,
- une ou plusieurs membranes (2), essentiellement étanches aux gaz, pour passer sélectivement de l'hydrogène et
- un mécanisme (5) pour passer de l'eau dans ladite chambre de réaction, **caractérisé en ce que** :
- ladite (lesdites) source(s) de chaleur (4,11) est (sont) placée(s) dans l'eau à l'intérieure de ladite chambre de réaction (1),
- la distribution de température est prédéterminée, comprenant
o des zones où la température est assez élevée afin que l'eau dans ces zones est au moins partiellement dissociée et qui sont assez grandes pour contenir lesdites membranes sélectives pour l'oxygène et
o des zones de températures inférieures qui sont assez grandes pour contenir lesdites membranes sélectives pour l'hydrogène et où lesdites températures plus basses correspondent aux conditions de fonctionnement des matériaux des membranes,
et elle est obtenue et contrôlée par la puissance du chauffage, par un refroidissement des parois de la chambre du réacteur, par le positionnement des membranes et par la (les) distances entre la (les) source(s) de chaleurs et les parois de la chambre du réacteur,
- lesdites membranes (3) sélectives pour l'oxygène sont placées dans lesdites zones à températures élevées,
- lesdites membranes (2) sélectives pour l'hydrogène sont placées dans lesdites zones à températures inférieurs,
- une ou plusieurs couches de boucliers de rayonnement (7) sont disposées dans la zone formée entre lesdites températures élevées et celle formée par lesdites températures inférieures de sorte de réduire le flux de chaleur et d'augmenter le gradient thermique, en laissant passer l'hydrogène.

2. Un dispositif selon la revendication 1, **caractérisée en ce que** lesdites membranes (3) sélectives pour l'oxygène sont disposées autour ladite (lesdites) source(s) de chaleur (4,11) de sorte de réduire le flux de chaleur depuis la (les) source(s) de chaleur vers les zones en dehors des températures élevées et à former un écran protégeant les autres composants du rayonnement thermique direct venant de ladite (lesdites) source(s) de chaleur.

3. Un dispositif selon une des revendications 1 ou 2, **caractérisé en ce que** le système de chauffage est constitué d'un ou de plusieurs brûleurs à gaz poreux.

4. Un dispositif selon une des revendications 1 ou 2, **caractérisé en ce que** le système de chauffage est constitué d'un ou de plusieurs brûleurs à gaz turbulents.

5. Un dispositif selon une des revendications 1 ou 2, **caractérisé en ce que** le système de chauffage est constitué d'un ou plusieurs concentrateurs (8,9) de rayonnement solaire focalisant les rayons dans l'intérieur du réacteur (1).

6. Un dispositif selon l'une ou quelconque des revendications précédentes, **caractérisé en ce que** la pression et la distribution de température sont maintenues stables en réglant la puissance de ladite (lesdites) source(s) de chaleur, la quantité d'eau injectée dans la chambre de réaction et le refroidissement des parois de celle-ci.

7. Un dispositif selon l'une ou quelconque des revendications précédentes, **caractérisé en ce que** les parois de la chambre de réaction (1), lesdites membranes sélectives pour l'oxygène (3), lesdites membranes sélectives pour l'hydrogène (2), les deux dites membranes ou n'importe quel autre composant dans la chambre de réaction (1) peut contenir un ou plusieurs réactants ou catalyseurs favorisant la dissociation de l'eau en l'hydrogène et l'oxygène à des températures plus basses.

8. Un dispositif selon l'une ou quelconque des revendications précédentes, **caractérisée en ce que** l'arrivée de l'eau est utilisée pour refroidir des composants thermosensibles du réacteur.

9. Un dispositif selon l'une ou quelconque des revendications précédentes, **caractérisé en ce que** conjointement à un consommateur d'hydrogène, l'eau produite par ledit consommateur est recyclée dans le dispositif, dans le but d'optimiser son rendement énergétique.

## Claims

1. A device for thermal separation of water into hydrogen and oxygen comprising a closed reaction chamber (1) containing water and, within said reaction chamber:
- a heating system comprising one or more elements of heat source (4, 11)
- one or more substantially gas impervious membranes (3) for selectively passing oxygen,
- one or more substantially gas impervious membranes (2) for selectively passing hydrogen, and
- a mechanism (5) for passing water into said reaction chamber, **characterised in that**
- said heat source(s) (4, 11) is (are) placed in the water within the reaction chamber (1),
- the temperature distribution is predetermined by
• the presence of zones in which the temperature is elevated such that water in said zones is at least partially dissociated and having a size to contain said oxygen selective membranes, and
• the presence of zones of lower temperatures having a size to contain said hydrogen selective membranes and wherein the lower temperatures correspond to the functional conditions of the materials of the membranes,
and wherein the temperature distribution is attained and regulated by the heating power, a cooling of the walls of the reaction chamber, the arrangement of the membranes and the distance between the heat source(s) and the walls of the reaction chamber,
- said oxygen selective membranes (3) are provided in said zones of elevated temperature,
- said hydrogen selective membranes (2) are provided in said zones of lower temperature, and
- one or more layers of radiation shields (7) are provided in the zone formed between the elevated temperatures and that formed by the lower temperatures such that, while letting hydrogen pass, the heat flow is reduced and the thermal gradient is augmented..

2. Device of claim 1 **characterised in that** the oxygen selective membranes (3) are arranged around the heat source(s) in order to reduce the heat flow from the heat source(s) to the zones outside the elevated temperatures and to form a shield protecting the other components against a direct thermal radiation coming from the heat source(s).

3. Device according to one of claims 1 or 2 **characterised in that** said heating system consists of one or more porous gas burners.

4. Device according to one of claims 1 or 2 **characterised in that** said heating system consists of one or more turbulent gas burners.

5. Device according to one of claims 1 or 2 **characterised in that** said heating system consists of one or more concentrators (8, 9) of solar radiation focussing the rays into the inside of the reactor (1).

6. Device according to one or more of the preceding claims **characterised in that** the pressure and the temperature distribution are maintained stable by regulating the power of said heat source(s), the quantity of water injected into the reaction chamber and the cooling of its walls.

7. Device according to one or more of the preceding claims **characterised in that** the walls of the reaction chamber (1), said oxygen selective membranes (3), said hydrogen selective membranes (2), both of said membranes or any other component in the reaction chamber (1) can contain one or more reactants or catalysts favouring the water dissociation into hydrogen and oxygen at lower temperatures.

8. Device according to one or more of the preceding claims **characterised in that** the water feeding is used to cool the thermosensitive components of the reactor.

9. Device according to one or more of the preceding claims **characterised in that** it is in conjunction with a hydrogen consumer wherein water produced by the consumer is recycled into the device, thereby optimising its energetic degree of efficiency.

## Patentansprüche

1. Vorrichtung zur thermischen Trennung von Wasser in Wasserstoff und Sauerstoff, umfassend eine geschlossene, Wasser enthaltende Reaktionskammer (1) und in der Reaktionskammer:
- ein Heizsystem, das eine oder mehrere Wärmequelle(n) (4, 11) umfasst,
- eine oder mehrere, im Wesentlichen gasundurchlässige Membran(en) (3), die eine selektive Durchlässigkeit für Sauerstoff aufweisen,
- eine oder mehrere, im Wesentlichen gasundurchlässige Membran(en) (2), die eine selektive Durchlässigkeit für Wasserstoff aufweisen,
- eine Einrichtung (5) zum Einleiten von Wasser in die Reaktionskammer,
**dadurch gekennzeichnet, dass**
- die Wärmequelle(n) (4, 11) in dem Wasser im Inneren der Reaktionskammer angeordnet ist/sind,
- die Temperaturverteilung vorbestimmt ist, in dem
• Zonen vorgesehen sind, in denen die Temperatur so hoch ist, dass das Wasser in diesen Zonen mindestens teilweise dissoziiert ist, und die so groß sind, dass sie die für Sauerstoff selektiven Membran(en) aufnehmen können, und
• Zonen niedrigerer Temperatur vorgesehen sind, die so groß sind, dass sie die für Wasserstoff selektive(n) Membran(en) aufnehmen können und in denen die niedrigeren Temperaturen den Bedingungen für die Funktionsfähigkeit der Membranmaterialien entsprechen,
und die Temperaturverteilung durch die Heizleistung, durch eine Kühlung der Wände der Reaktionskammer, durch die Anordnung der Membranen und durch den Abstand zwischen der/den Wärmequelle(n) und den Wänden der Reaktionskammer erreicht und gesteuert wird,
- die für Sauerstoff selektiven Membranen (3) in den Zonen hoher Temperatur angeordnet sind,
- die für Wasserstoff selektiven Membranen (2) in den Zonen niedrigerer Temperatur angeordnet ist/sind,
- eine oder mehrere Schicht(en) von Strahlungsschutzschildern (7) in der Zone, die zwischen den höheren Temperaturen und denjenigen niedriger Temperatur gebildet wird, angeordnet ist/sind, so dass der Wärmefluss vermindert und der thermische Gradient erhöht wird, während Wasserstoff durchgelassen wird.

2. Vorrichtung nach Anspruch 1, **dadurch gekennzeichnet, dass** die für Sauerstoff selektiven Membranen (3) um die Wärmequelle(n) (4, 11) angeordnet ist/sind, um den Wärmefluss von der/den Wärmequelle(n) zu den Zonen außerhalb der erhöhten Temperaturen zu vermindern und eine Abschirmung der anderen Komponenten gegenüber der direkten, von der/den Wärmequelle(n) ausgehenden thermischen Strahlung zu bilden.

3. Vorrichtung nach einem der Ansprüche 1 oder 2, **dadurch gekennzeichnet, dass** das Heizsystem aus einem oder mehreren Porengasbrenner(n) besteht.

4. Vorrichtung nach einem der Ansprüche 1 oder 2, **dadurch gekennzeichnet, dass** das Heizsystem aus einem oder mehreren Turbulenzgasbrenner(n) besteht.

5. Vorrichtung nach einem der Ansprüche 1 oder 2, **dadurch gekennzeichnet, dass** das Heizsystem aus einem oder mehreren Sonnenstrahlkollektoren (8, 9) besteht, welche die Strahlen in den Reaktor (1) fokussieren.

6. Vorrichtung nach einem oder mehreren der vorhergehenden Ansprüche, **dadurch gekennzeichnet, dass** der Druck und die Temperaturverteilung stabil gehalten werden, in dem die Leistung der Wärmequelle(n), die Menge des in die Reaktionskammer injizierten Wassers und die Kühlung der Wände dieser reguliert werden.

7. Vorrichtung nach einem oder mehreren der vorhergehenden Ansprüche, **dadurch gekennzeichnet, dass** die Wände der Reaktionskammer (1), die für Sauerstoff selektiven Membranen (3), die für Wasserstoff selektiven Membranen (2), beide dieser Membranen oder jedweder andere Bestandteil in der Reaktionskammer (1) einen oder mehrere Reaktanden oder Katalysatoren enthalten können, welche die Spaltung von Wasser in Wasserstoff und Sauerstoff bei niedrigeren Temperaturen fördern.

8. Vorrichtung nach einem oder mehreren der vorhergehenden Ansprüche, **dadurch gekennzeichnet, dass** die Wasserzufuhr zur Kühlung der hitzeempfindlichen Bestandteile des Reaktors verwendet wird.

9. Vorrichtung nach einem oder mehreren der vorhergehenden Ansprüche, **gekennzeichnet durch** die Verbindung mit einem Wasserstoffverbraucher, wobei das **durch** den Verbraucher erzeugte Wasser in die Vorrichtung recycelt wird, um seinen energetischen Wirkungsgrad zu optimieren.
